Europäisches Patentamt
European Patent Office
Office européen des brevets

(19) (11) Numéro de publication: **0 343 073 A1**

# (12) DEMANDE DE BREVET EUROPEEN

(21) Numéro de dépôt: **89401370.5**

(22) Date de dépôt: **18.05.89**

(51) Int. Cl.⁴: **G 02 F 1/133**
G 02 B 5/20

(30) Priorité: **20.05.88 FR 8806780**

(43) Date de publication de la demande: **23.11.89 Bulletin 89/47**

(84) Etats contractants désignés: **DE GB NL**

(71) Demandeur: **COMMISSARIAT A L'ENERGIE ATOMIQUE**
**31/33, rue de la Fédération**
**F-75015 Paris (FR)**

(72) Inventeur: **Mulatier, Laurence**
**2 Résidence du Château**
**F-38760 Varces (FR)**

**Tanguy, Jean**
**4, rue Alphonse Bertillon**
**F-7505 Paris (FR)**

**Vauchier, Claude**
**Route de Theys Villard Bozon**
**F-38570 Goncelin (FR)**

(74) Mandataire: **Lhoste, Catherine (FR) et al**
**Brevatome 25, rue de Ponthieu**
**F-75008 Paris (FR)**

## (54) Filtres colorés composites conducteurs et leurs procédé de fabrication.

(57) Le procédé consiste en particulier à préparer une émulsion (30) contenant un mélange de polyester-mélamine, un colorant, un solvant organique et de l'eau ; immerger dans l'émulsion les électrodes (8r) connectées entre elles et une contre-électrode (12) ; appliquer une tension continue $V_2$ entre les électrodes jouant le rôle d'anode et la contre-électrode pour électrodéposer sur les électrodes un polymère hôte isolant coloré (32) ; ajouter à l'émulsion une solution d'aniline, de pyrrole ou de thiophène, d'amine et de sel dopant ; appliquer une tension continue $V_1$ inférieure à $V_2$ pour doper le polymère hôte isolant par un polymère conducteur dopé et recuire les filtres (32a) obtenus pour réticuler le polyester avec la mélamine.

FIG. 3a

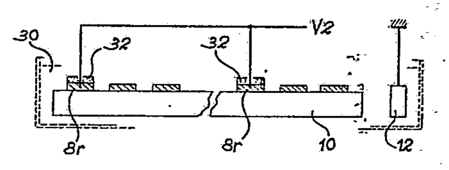


FIG. 3b

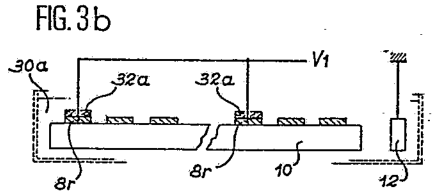


EP 0 343 073 A1

## Description

# FILTRES COLORES COMPOSITES CONDUCTEURS ET LEUR PROCEDE DE FABRICATION

L'invention se rapporte à la réalisation de filtres colorés conducteurs, utilisables en particulier pour former des mosaïques de filtres colorés sur les écrans de cellules à cristaux liquides afin de teinter la lumière modulée par ces cellules.

Ces mosaïques de filtres colorés peuvent être utilisées dans les écrans plats de télévision en couleur ou dans les écrans de terminal d'ordinateur, en couleur.

On sait que pour réaliser de tels écrans, il est nécessaire de réaliser des triades de filtres colorés en rouge, en vert et en bleu qui soient susceptibles de fusionner lors d'une observation à une certaine distance afin d'obtenir des images par colorimétrie additive.

La présente invention s'applique plus spécialement aux écrans à cristaux liquides multiplexés, à adressage direct par l'intersection d'une ligne et d'une colonne, écrans dans lesquels les filtres colorés sont déposés directement sur les électrodes lignes ou colonnes des cellules.

Il existe plusieurs procédés actuellement pour réaliser de telles mosaïques connues de filtres colorés.

Ainsi l'article "A full-color matrix LCD with color layers on the electrodes" de Tatsuo Uchida et al., IEEE Transactions on Electron Devices, Vol. ED 30, N° 5, p. 503-507, 1983, décrit un procédé de photolithographie pour former des filtres colorés sur les électrodes transparentes d'une cellule à cristal liquide.

Selon ce procédé, on dépose tout d'abord sur l'ensemble des électrodes une couche de gélatine dopée avec un sensibilisateur permettant de durcir la couche après irradiation UV. On durcit ensuite la couche de gélatine aux endroits correspondant aux électrodes par irradiation UV en utilisant un masque approprié et en éliminant ensuite la gélatine non durcie. On dépose alors sur les électrodes ainsi revêtues une couche de résine photosensible positive que l'on soumet ensuite à une irradiation à travers un masque protégeant uniquement les électrodes ne devant pas être colorées. On élimine la résine sur les parties exposées puis on colore la couche de gélatine présente sur les électrodes non protégées et on élimine la résine sur toute la surface.

On recommence ensuite ces opérations pour obtenir successivement des électrodes recouvertes de rouge, de vert et de bleu. Enfin, on recouvre les filtres colorés d'une couche protectrice d'alcool polyvinylique dopé avec un agent de réticulation.

Ce procédé présente l'inconvénient de nécessiter l'emploi d'un produit sensible aux rayonnements UV pour la formation des filtres colorés. Par ailleurs, ce procédé ne permet pas d'inclure de façon homogène le colorant dans la couche de gélatine déposée sur les électrodes puisque l'opération de coloration des filtres est effectuée après durcissement de la couche de gélatine. En outre, le procédé dépend de la concentration en colorant, du pH (colorants acides), de la température du bain et de la composition de la gélatine (produit naturel). De plus, les filtres colorés obtenus sont peu stables thermiquement. Enfin, ce procédé nécessite l'utilisation successive de 4 masques pour obtenir la mosaïque de filtres colorés en rouge, en bleu et en vert.

L'article "A new class of color filters for liquid crystal displays" de W.J. Latham, SID 87 Digest p. 379-382, décrit encore un procédé photolithographique pour former des filtres colorés sur les électrodes transparentes d'une cellule à cristal liquide.

Selon ce procédé, on dépose tout d'abord sur l'ensemble du substrat une couche composée d'un mélange d'acide polyamique et d'un colorant en solutiondans la N-méthylpyrrolidone. La couche est ensuite séchée à une température suffisante pour amorcer la formation d'imides, usuellement 170-180°C.

La couche ainsi séchée et prépolymérisée est recouverte avec une résine photosensible positive, que l'on sèche ensuite, de manière à éliminer le solvant de la résine. Le substrat est alors insolé au travers d'un masque puis la résine exposée, ainsi que la sous-couche d'acide polyamique correspondante, sont enlevées avec une solution basique.

La résine non exposée est ensuite enlevée avec un solvant organique ne solubilisant pas l'acide polyamique. L'acide polyamique est ensuite complètement imidisé par recuit à 200-250°C pendant environ 1 heure. On recommence ensuite ces opérations pour obtenir successivement les trois couleurs, rouge, bleu et vert.

Ce procédé présente l'avantage de donner une stabilité thermique aux filtres obtenus mais leur résistivité est importante : $6.10^{14}$ ohm.cm pour le rouge, $8.10^{14}$ ohm.cm pour le vert et $2.10^{15}$ ohm.cm pour le bleu.

Il en est de même pour le procédé identique décrit par D.A. Bolon et al, dans l'article : "Color filters Polyamic Acids" de SID 87 Digest p. 395-396.

Le document FR-A-2 595 148 du Commissariat à l'Energie Atomique décrit également un procédé de fabrication de filtres colorés par photolithographie.

Selon ce procédé, on dépose tout d'abord sur l'ensemble du substrat une première couche composée d'un mélange de polyamide et d'un colorant en solution dans l'acide formique. Après séchage de cette première couche, on dépose par-dessus une seconde couche de résine photosensible négative. Après irradiation de certaines zones de la seconde couche de résine au travers d'un masque, on élimine les parties de la résine de la seconde couche non exposées à l'aide du solvant initial de cette résine. Puis la sous-couche correspondante constituée du mélange polyamide colorant est éliminée avec de l'éthanol et par frottage.

La couche de résine protégeant le filtre déposé est éliminée à son tour par rinçage à l'isopropanol. Le filtre obtenu est alors séché 1/4 d'heure à 120°C, puis recuit 6 minutes à 160°C. On recommence ensuite ces

opérations pour obtenir successivement les trois couleurs, rouge, vert et bleu.

Ce procédé , bien que présentant un certain nombre d'avantages par rapport à celui de Tatsuo Ushida conduit encore à l'obtention de filtres colorés non conducteurs. Les filtres colorés peuvent aussi être réalisés par sérigraphie comme décrit dans l'article de Tatsuo Uchida : "A liquid crystal multicolor display using color filters", Eurodisplay 81, p. 39-42.

Selon ce procédé, on sérigraphie successivement trois encres (rouge, vert, bleu) sur les électrodes du substrat. Après chaque dépôt, on stabilise la couche sérigraphiée par traitement à 100° C pendant une heure. Le substrat est ensuite trempé dans une solution aqueuse d'alcool polyvinylique à 1 % en poids, puis séché et enfin recuit 30 minutes à 150-200° C.

Dans ce procédé, le pas des bandes colorées sérigraphiées est trop important pour être utilisé et le profil des bandes est très arrondi. En outre, les filtres colorés obtenus sont encore isolants.

Un autre procédé de fabrication de filtres colorés utilise la technique de coloration d'une couche d'aluminium anodisée comme décrit dans l'article "A microdot colour filter for LCD's incorporating a black mask for improved colour saturation" de C.J. Walker et B. Needham, Japan Display's 86, p. 294-297.

Dans ce procédé on dépose sous vide un film d'aluminium sur un substrat en verre et on trempe l'ensemble dans un bain électrolytique constitué d'acide sulfurique et de glycérol. Cet ensemble joue le rôle d'anode. Une électrolyse partielle permet de rendre le film d'aluminium poreux.

Après rinçage et séchage on recouvre le film d'aluminium d'une couche de laque protectrice (acétate de cellulose) que l'on sèche. Ensuite, on dépose sur la couche de laque une résine photosensible négative en émulsion dans l'eau. Lorsque la résine est sèche, on l'expose au rayon U.V. à travers un masque. Les parties non exposées sont éliminées par pulvérisation puis séchage. On applique alors une solution alcoolique contenant l'un des trois colorants.

Cette solution alcoolique dissout la couche de laque protectrice et permet au colorant de migrer dans les pores de l'aluminium. On élimine l'excès de colorant en l'essuyant puis on dissout la couche de résine en utilisant un solvant spécifique. Après rinçage et séchage on procède de la même manière pour disposer les deux autres colorants. Enfin, l'ensemble des filtres est stabilisé par immersion dans une solution aqueuse d'acétate de nickel à 95° C pendant 40 minutes.Ce traitement convertit l'aluminium en oxyde hydraté, ce qui permet de bloquer les colorants dans la couche d'aluminium.

Le filtre ainsi obtenu est isolant électrique. On doit alors déposer une couche d'I.T.O. (oxyde d'indium et d'étain) sur les filtres que l'on grave ensuite pour faire apparaître le réseau d'électrodes. Ce procédé est pénalisé par la médiocre transmission de la couche d'aluminium anodisé et par la mauvaise saturation des couleurs obtenues.

Une autre technique de fabrication de filtres colorés connue est l'évaporation à chaud de différents pigments organiques, comme décrit dans l'article "High quality organic pigment color filter for color liquid crystal display" de T. Ueno et al., Japan display 86, p. 320-322.

Dans ce procédé, les filtres trichromes sont obtenus par composition soustractive des trois couleurs primaires, jaune, magenta et cyan, chaque couche de colorant étant obtenue par évaporation sous vide sur un substrat, en utilisant la technique de résistance chauffante. Chaque point image est fabriqué en utilisant un masque métallique, lors de l'évaporation. Dans ce procédé, on utilise un seul masque pour les trois couleurs que l'on décale pas à pas. En vue de l'affichage, on dépose alors une couche conductrice que l'on grave pour former le réseau d'électrodes.

Ce procédé bien que relativement simple et ne comportant aucune étape de photolithographie conduit encore à la formation de filtres isolants. En outre, le positionnement du masque par rapport aux électrodes est plutôt critique.

La dernière technique connue pour réaliser une mosaïque de filtres colorés est le dépôt direct, par électro-déposition, d'un film mince d'un polymère coloré sur les électrodes de la cellule. Ce procédé est en particulier décrit dans le document US-A-4 522 691 de M. Suginoya et al.

Selon ce procédé, on disperse par agitation un mélange de résine polyester ou acrylique, de mélamine, d'un agent de dispersion et d'un pigment avec de l'eau ou un solvant organique hydrophilique. Cette dispersion est ensuite mélangée avec un solvant organique, une amine organique et de l'eau. Après agitation, cette émulsion est prête à être utilisée. Le polymère employé possède des fonctions carboxyliques libres ($-CO_2H$) ; dans l'émulsion, le polymère est partiellement solubilisé du fait de la présence de l'amine organique ($-CO_2^- \, ^+NH_3-$).

Si l'on fait passer un courant entre deux électrodes trempant dans l'émulsion, on observe que l'anion carboxylique dissocié migre vers l'électrode positive (anode), sur laquelle il précipite en captant un proton $H^+$ selon le schéma simplifié (I).

$$2H_2O \rightarrow 4H^+ + O_2 + 4e^- \quad (I)$$

$$H^+ + RCOO^- \rightarrow \underline{RCOOH}\downarrow$$

où R est la chaîne carbonée de la résine polyester ou acrylique.

De plus, le pigment se dépose avec le polymère sur l'anode par effet d'électrophorèse.

Ainsi, le substrat sur lequel sont gravées les électrodes transparentes sert d'anode et la contre-électrode (cathode) est une plaque d'acier inoxydable.

Les électrodes du substrat devant recevoir le dépôt de la première couleur sont connectées entre elles. L'électrodéposition commence quand on applique un courant continu entre l'anode et la cathode. La couche électrodéposée est isolante et donc le processus de dépôt du polymère tend à s'arrêter automatiquement.

Après l'électrodéposition, le substrat de verre est retiré de la dispersion puis rincée à l'eau et séché.

Enfin, on recuit à 200° C le filtre pendant 30 minutes. Ce traitement permet de réticuler la résine polyester ou acrylique grâce à la mélamine.

On recommence ensuite cette série d'opérations pour obtenir successivement les trois couleurs rouge, vert et bleu.

Ce procédé de fabrication par électrodéposition présente un certain nombre d'avantages comme la simplicité du procédé, la haute résolution des bandes colorées, le faible coût de fabrication, un bon contrôle d'épaisseur du filtre. Malheureusement, ce procédé correspond encore au dépôt de filtres non conducteurs sur les électrodes.

La variété des différents procédés de fabrication de filtres colorés montre l'importance d'obtenir de tels filtres et la complexité d'obtenir des filtres dont les propriétés physiques sont satisfaisantes.

Les différentes technologies décrites précédemment en plus de leurs inconvénients spécifiques conduisent toutes à l'obtention de filtres colorés isolants, entraînant des conditions de fonctionnement plus ou moins critiques de la cellule d'affichage selon le type d'effets électrooptiques utilisés, étant donné que les filtres sont disposés sur les électrodes de la cellule.

On constate en particulier que le temps d'accès du signal de commande au cristal liquide est très grand (supérieur à 250 ns) du fait de la présence élevée des filtres colorés isolants. En outre, on observe des pertes en tension, en mode statique, et les variations d'épaisseur des filtres isolants induisent des variations de cette tension.

Pour contourner ce problème, on pourrait déposer directement des électrodes conductrices sur les filtres colorés (dépôt d'une couche conductrice, puis gravure par photolithographie). Malheureusement, le dépôt du conducteur doit se faire à "froid" ($<200°$C) pour ne pas détériorer les filtres colorés et, dans ce cas, la conductivité du conducteur est médiocre (200 ohm.cm$^2$ au lieu de 10 ohm.cm$^2$ pour ITO). De plus, l'adhérence du conducteur sur les différents types de polymères utilisés pour réaliser les filtres colorés n'est pas satisfaisante.

Une autre solution est le procédé de Suginoya décrit dans le brevet US-A-4 639 088.

Ce procédé qui permet d'obtenir des filtres conducteurs par électrodéposition consiste à ajouter dans le bain d'électrodéposition décrit dans le document US-A-4 522 691 des particules conductrices. Ces particules sont électrodéposées sur les filtres de façon identique aux pigments colorés, c'est-à-dire par électrophorèse.

Les particules conductrices utilisées sont faites d'oxyde d'étain, d'oxyde d'indium, d'oxyde d'antimoine, d'oxyde de zinc, d'oxyde de cadmium, d'or, d'argent ou de nickel. A partir d'un certain pourcentage, les particules présentes dans la couche du polymère assurent la percolation et la conduction du système.

Malheureusement, ce pourcentage de particules est très élevé. Ainsi, on note qu'en moyenne, il faut 1,2 g de particules conductrices pour 1 g de mélange polymère-mélamine. Des taux aussi importants font chuter sensiblement la transparence du filtre coloré (de 40% environ), ce qui est inacceptable.

Enfin, il existe une adaptation du procédé de fabrication de filtres colorés par électrodéposition qui est décrite dans le document EP-A-0 224 040 de STANLEY ELECTRIC CO. Cette adaptation permet d'éliminer les problèmes liés au caractère isolant des filtres colorés déposés sur les électrodes transparentes.

Selon ce procédé, on dépose une résine photo-sensible positive sur tout le substrat sur lequel sont déjà gravées les électrodes conductrices. On insole alors sous rayonnement UV au travers d'un masque la couche de résine. Les parties non exposées correspondent à des plots situés sur les électrodes et sont régulièrement espacées. Après révélation par un solvant adapté, il ne reste plus sur le substrat que les plots de résine.

L'étape suivante consiste à électrodéposer les filtres colorés sur les électrodes. Les plots de résine présents dans les bandes composant les filtrès colorés sont éliminés par solubilisation dans le solvant de la résine. Ainsi, chaque bande colorée du substrat présente un certain nombre de trous régulièrement espacés, permettant de prendre un contact avec la couche d'ITO de l'électrode.

On dépose ensuite une seconde couche d'ITO à froid ($<200°$C) sur tout le substrat. Par photolithographie, on grave alors la deuxième couche d'ITO de façon à ce que les parties restantes recouvrent exactement les bandes composant les filtres colorés. Ainsi, la première couche d'ITO constituant les électrodes est en contact avec la deuxième couche d'ITO, prenant ainsi en "sandwich", les filtres colorés.

La conductivité de la deuxième couche d'ITO est suffisante mais cette modification complique et rallonge sensiblement le procédé d'électrodéposition et augmente le coût de fabrication des filtres.

L'invention a donc pour objet des filtres colorés réalisés en matériau conducteur ainsi que leur procédé de fabrication, permettant de remédier aux différents inconvénients ci-dessus. Ces filtres sont en particulier disposés sur les électrodes conduc trices sans avoir les problèmes liés aux couches isolantes. En outre, ils présentent des propriétés optiques suffisantes telles qu'une bonne transmission de la lumière et une bonne saturation des couleurs. En outre, leur procédé de fabrication est relativement simple à mettre en oeuvre, limitant ainsi le coût des filtres.

Quel que soit l'effet électrooptique utilisé, les inventeurs ont trouvé que les filtres colorés devaient présenter une résistivité au plus égale à $10^6$ ohm.cm pour s'affranchir des problèmes de temps d'accès des signaux à la couche de cristal liquide ainsi que des pertes en tension dans les filtres.

Comme effets électrooptiques auxquels s'applique l'invention, on peut citer la biréfringence contrôlée électriquement (BCE), l'effet nématique twisté (TN) ou super twisté (STN), l'effet superbiréfringent (SBE), l'effet "guest-host" (GH) ou les effets utilisant les cristaux liquides smectiques A ainsi que les cristaux liquides smectiques chiraux C ou I ; les smectiques chiraux C ou I ont des propriétés de ferroélectricité.

Le principe de l'invention est de réaliser des filtres colorés conducteurs en matériau composite. Selon l'invention, les filtres sont constitués d'un polymère isolant coloré dans lequel est introduit, régulièrement, un polymère conducteur réduisant ainsi la résistivité électrique des filtres.

De façon plus précise, l'invention a pour objet un filtre coloré conducteur composite formé d'un polymère hôte isolant durci, contenant un colorant et dopé par un polymère conducteur électronique de sorte que le filtre présente une résistivité au plus égale à $10^6$ ohm.cm.

En particulier, la résistivité du filtre coloré est comprise entre $10^3$ et $10^6$ ohm.cm.

Il est connu, par ailleurs, de rendre conducteur un premier polymère isolant déposé sur un substrat en verre pourvu d'une couche d'ITO par incorporation d'un second polymère conducteur.

L'une des techniques pour rendre conducteur un polymère isolant est par exemple décrite dans l'article de Macromolécules 1987, 20, p. 749-753, "Polypyrrole based conducting polymer alloy films : physical properties and film morphology" d'Osamu Niwa et al.

Cette technique consiste à déposer sur une électrode conductrice un film de polymère isolant PVC (polychlorure de vinyle) ou PVDF-$T_vF_L$ (copolymère de fluorure de vinylidène et de trifluoroéthylène) par enduction. Cette électrode est placée dans un bain d'électrolyse contenant une deuxième électrode conductrice, un solvant dans lequel est dissous du pyrrole et du tétraéthyl ammonium-p-toluènesulfonate.

Lorsque l'électrode supportant le polymère isolant qui est de préférence légèrement soluble dans le solvant, est portée à un potentiel adéquat par rapport à la contre-électrode le pyrrole pénètre dans le polymère et vient s'oxyder et se polymériser sur l'électrode positive en captant un anion dopant.

On observe ensuite la croissance de particules conductrices à l'intérieur du polymère isolant. Finalement lorsque la charge électrique injectée dans la cellule est suffisante, c'est tout le polymère isolant qui devient conducteur et la surface en regard de l'électrolyte devient elle-même conductrice.

On obtient ainsi un film composite comportant au contact de l'électrode une couche régulière de polypyrrole conducteur puis une partie intermédiaire plus épaisse formée d'un mélange du polymère hôte (PVC ou PVDF-TrFE) et de polypyrrole et enfin une troisième partie au contact de l'électrolyte, composée du polymère hôte isolant et de chaînes de polymère conducteur qui croissent vers la surface et débouchent sous forme de petites particules conductrices. Pour cette raison, la résistance électrique du film composite du côté de l'électrolyte est nettement plus faible que celle du film composite du côté de l'électrode.

Du fait même de cette structure composite, la résistance en volume du film composite est nettement plus faible que celle de la surface du film du côté électrolyte. En conséquence, le film composite obtenu présente une conductivité en volume comparable à celle d'un polymère conducteur. Cette conductivité dépend naturellement de la quantité totale de polymère conducteur inclus dans le polymère hôte isolant et donc de la charge totale injectée dans la cellule. Ce procédé permet donc bien de rendre conducteur un film isolant par voie électrochimique.

Un autre procédé pour rendre conducteur un polymère isolant est notamment décrit dans l'article Synthetic Metals, 18 (1987), p. 857-860, "One step elaboration of transparent conducting composites from poly-3-methylthiophene" de J. Roncali et al.

Ce procédé consiste à déposer simultanément sur une électrode conductrice transparente à la fois le polymère isolant hôte et le polymère conducteur. A cet effet, on prépare une solution d'électrolyse contenant le polymère hôte dissous dans un polyvinylalcool (PVA) ou du polyméthacrylate de méthyle (PMMA), le monomère polymérisable électrochimiquement (méthyl-3-thiophène), un sel contenant un anion dopant du polymère conducteur (chlorure ou perchlorate) et deux électrodes dont l'une est mobile dans la direction verticale. Le polymère composite se forme par polymérisation, à l'anode, du monomère en appliquant une tension entre les deux électrodes tandis que le polymère isolant est entraîné par le déplacement vertical de l'anode mobile (procédé de dépôt par tirage).

L'épaisseur du film composite dépend de la concentration du polymère hôte en solution et de la vitesse de tirage. La conductivité du film composite obtenu va dépendre à la fois des concentrations en polymère, en monomère, en sel, de la vitesse de tirage et du courant électrique qui traverse la cellule.

Une troisième voie de réalisation d'un polymère conducteur composite consiste à préparer un mélange de polymère isolant et d'un oxydant solubles dans un même solvant et à déposer un film de ce solvant par évaporation. Ce film est ensuite exposé aux vapeurs d'un monomère qui polymérise à l'intérieur du film au contact de l'oxydant. Cette technique a été apliquée avec succès à la réalisation de films composites de polyvinylalcool-polypyrrole avec $FeCl_3$ pour oxydant et dopant. Elle est décrite par exemple dans l'article de T. OJIO et S. MIYATA, Polymer Journal, vol. 18, n° 1, p. 95-98 (1986).

Les différents procédés connus pour rendre conducteur un polymère isolant n'ont jusqu'à ce jour jamais été utilisés pour fabriquer des filtres colorés conducteurs en vue de former des mosaïques de filtres colorés sur des écrans de cellules à cristaux liquides et de teinter la lumière modulée par ces cellules.

Ceci est certainement dû au fait que personne jusqu'à ce jour n'avait pensé à déterminer la conductivité limite que devaient avoir les filtres colorés pour obtenir un temps d'accès des signaux à la couche de cristal liquide d'une cellule satisfaisant et des pertes de tension les plus faibles possibles.

Selon l'invention, une résistivité au plus égale à $10^6$ ohm.cm pour les filtres colorés est obtenue en particulier en utilisant de 1 à 20 % en volume de polymère conducteur. Ce pourcentage de polymère conducteur assure la percolation et la conduction du système. Les seuils de percolation ont l'avantage d'être plus faibles que ceux obtenus conformément à l'art antérieur avec du noir de carbone ou des particules métalliques.

Les polymères conducteurs utilisables dans l'invention sont formés par polymérisation ou copolymérisation d'un ou plusieurs monomères choisis dans le groupe des composés aromatiques présentant une succession de simples et de doubles liaisons alternées.

Comme polymères conducteurs, on peut citer les polyacétylènes, les polyanilines, les polythiophènes, les polypyrroles ainsi que leurs dérivés. Comme dérivés de la polyaniline, on peut utiliser les poly(para-aminodiphénylamines), les polytoluidines (ortho ou méta), les polyaminophénols (ortho ou méta), les polycarboxyanilines (ortho ou méta). Comme dérivés du polythiophène, on peut citer les polybithiophènes, les poly(méthyl-3-thiophènes), les polyphénothiophènes et comme dérivés du polypyrrole, les poly-(N-méthylpyrroles).

Avantageusement, on utilise les polyanilines ou les polythiophènes du fait de leur meilleure résistance aux hautes températures.

Selon l'invention, la polymérisation est une oxydation du monomère correspondant en milieu liquide. Cette oxydation peut être une oxydation chimique faisant intervenir des agents oxydants tels que le bichromate ou le permanganate de potassium, l'eau oxygénée ou autre peroxyde, le persulfate d'ammonium, etc. dissous dans le milieu liquide. Cependant, on utilise avantageusement une oxydation électrochimique en présence d'un dopant anionique.

A cet effet, on dissout dans le milieu liquide des sels de métaux alcalins ou d'ammonium comme par exemple $LiClO_4$, $LiBF_4$, LiCl, le chlorure ou le fluorure de tétraméthylammonium, $NaBF_4$, NaCl, etc.

Les polymères conducteurs cités précédemment ont l'avantage de présenter une coloration qui varie avec leur degré d'oxydation. En particulier, le polypyrrole est noir à l'état complètement oxydé et jaune à l'état réduit. Il en est de même pour le polythiophène.

Avec le polythiophène, on peut obtenir une couleur rouge à l'état réduit tandis que la polyaniline présente une couleur jaune en réduction et tend vers le vert en oxydation puis vers un bleu foncé lorsqu'elle est totalement oxydée.

Ainsi, on peut modifier les couleurs du filtre en jouant sur le potentiel utilisé pour l'électrooxydation.

En outre, on peut introduire des dopants supplémentaires dans le polymère conducteur renforçant le contraste des couleurs comme les sels de phtalocyanine. Ces sels peuvent aussi être utilisés comme unique dopant.

L'invention a aussi pour objet un procédé de fabrication d'un filtre conducteur composite coloré sur une électrode conductrice transparente comprenant :

(a) au moins une étape d'électrodéposition, en présence d'un colorant, d'un polymère hôte isolant thermodurcissable, sur l'électrode,

(b) au moins une étape de dopage du polymère hôte électrodéposé, par un polymère conducteur électronique, et

(c) une étape de recuit afin de durcir le polymère hôte et de fixer le colorant et le polymère conducteur dans le polymère hôte.

Dans le cas particulier de la fabrication d'une mosaïque de filtres conducteurs sur un ensemble d'électrodes conductrices transparentes, on relie électriquement les électrodes devant être recouvertes du même filtre et on répète au moins une fois les étapes (a), (b) et (c) en utilisant dans l'étape (a) un colorant différent.

Le procédé de fabrication des filtres colorés est donc un perfectionnement du procédé décrit dans le document US-A-4 522 691.

Les électrodes transparentes sont soit en oxyde d'indium, soit en ITO.

Le polymère électrodéposable est un polymère anionique à fonctions hydrophiles comportant par exemple des groupements carboxyliques ou hydroxyliques libres. La chaîne carbonée peut être du type résine acrylique ou polyester.

De façon avantageuse, le procédé selon l'invention consiste à :

- préparer une émulsion contenant un polymère hôte solubilisé comportant des groupements carboxyliques neutralisés, un solvant organique, de l'eau et un colorant,

préparer une solution d'un monomère électropolymérisable, contenant un dopant anionique,

- mélanger l'émulsion et la solution,
- immerger dans le mélange l'électrode transparente jouant le rôle d'anode et une contre-électrode jouant le rôle de cathode,
- appliquer au moins une tension continue entre l'électrode et la contre-électrode pour provoquer une électrodéposition anionique du polymère hôte, son dopage par un polymère conducteur dopé et le dépôt du colorant dans le polymère hôte, et
- recuire l'électrode revêtue du polymère hôte coloré et dopé pour durcir ledit polymère hôte.

L'emploi d'un polymère électropolymérisé in situ à l'anode évite de graver le filtre coloré et de déposer par dessus un conducteur transparent pour court-circuiter le filtre isolant conformément à l'art antérieur.

Selon l'invention, l'électrodéposition du polymère hôte et l'électropolymérisation du polymère conducteur peuvent être réalisées simultanément ou indépendamment l'une de l'autre.

La neutralisation des groupements carboxyliques peut être réalisée avec des bases inorganiques de métaux alcalins (NaOH, KOH) ou à l'aide d'amines organiques telles que la monoéthylamine, le diéthylamine, et celles citées dans le document US-A-4 522 691.

Le solvant organique utilisé dans l'émulsion peut être un alcool tel que le n-butanol, l'isopropanol, le N-butylalcool, des éthers comme les alkyles en $C_1$-$C_4$ cellosolves, les éthers méthylés et/ou éthylés du

diéthylène glycol , etc.

Afin d'empêcher une éventuelle dégradation du polymère conducteur dopant, on peut modifier le procédé de fabrication d'un filtre selon l'invention coloré comme suit :

- préparer une émulsion contenant un polymère hôte solubilisé comportant des groupements hydrophiliques neutralisés, un solvant organique, de l'eau et un colorant,
- préparer une solution d'un monomère électropolymérisable, contenant un dopant anionique et un agent de solubilisation partielle du polymère hôte,
- immerger dans l'émulsion l'électrode transparente jouant le rôle d'anode et une contre-électrode jouant le rôle de cathode,
- appliquer au moins une tension continue entre l'électrode et la contre-électrode pour provoquer une électrodéposition anionique du polymère hôte et le dépôt du colorant dans le polymère hôte,
- ajouter la solution à l'émulsion pour former un mélange,

appliquer au moins une tension continue entre l'électrode et la contre-électrode plongées dans le mélange pour provoquer le dopage du polymère hôte partiellement solubilisé, par le polymère conducteur dopé, et,

- recuire l'électrode revêtue du polymère hôte coloré et dopé pour durcir ledit polymère hôte.

Les filtres colorés obtenus précédemment sont destinés à équiper des écrans plats à cristaux liquides en couleur. Aussi, l'invention a encore pour objet un écran d'affichage en couleur à cristal liquide comportant des électrodes transparentes supportées par un substrat transparent et des filtres colorés électrodéposés sur lesdites électrodes, ces filtres étant au contact du cristal liquide.

D'autres caractéristiques et avantages de l'invention ressortiront mieux de la description qui va suivre, donnée à titre illustratif et non limitatif, en regard aux dessins annexés, dans lesquels :

- les figures 1a-1c illustrent une première variante de mise en oeuvre du procédé de fabrication de filtres colorés selon l'invention,
- les figures 2a-2e illustrent une seconde variante de mise en oeuvre du procédé de fabrication de filtres colorés selon l'invention,
- les figures 3a et 3b illustrent une troisième variante de mise en oeuvre du procédé de fabrication de filtres colorés selon l'invention, et
- la figure 4 représente schématiquement un écran d'affichage en couleur utilisant les filtres conformes à l'invention.

On décrit ci-après la réalisation d'une mosaïque de filtres colorés en rouge, en vert et en bleu mettant en oeuvre le procédé selon l'invention.

En se référant aux figures 1a-1c, on prépare tout d'abord dans un récipient 2 une émulsion contenant un mélange de polyester-mélamine, un agent de dispersion, un pigment rouge, de l'eau et un solvant organique. Cette émulsion est en particulier obtenue en dissolvant dans de l'eau la composition commercialisée par Sinto Coating Ltd. avec le nom SVia ED 3000. Le colorant rouge est par exemple celui vendu par Ciba Geigy sous la marque Rouge Filamid 11368.

L'émulsion obtenue est ensuite mélangée avec un solvant organique, une amine organique et de l'eau. Le solvant et l'amine sont ceux décrits dans le document US-A-4 522 691. L'émulsion est ensuite agitée vigoureusement.

Parallèlement, on prépare une solution aqueuse ou organique (acétonitrile, acétone, alcool primaire, cellosolve) contenant de l'aniline, du méthyl-3-thiophène ou du N-méthylpyrrole ainsi que du LiCl ou du $LiClO_4$. Cette solution est ensuite ajoutée à l'émulsion.

Dans le mélange obtenu, le polyester est partiellement solubilisé du fait de la présence de l'amine organique par formation de sels du type $-CO_2^-NH_3^+-$. Le mélange ainsi obtenu porte la référence 4 sur la figure 1a.

Avec le mélange 4 obtenu, on va réaliser des filtres colorés rouges 6 sur des électrodes transparentes 8r supportées par un substrat transparent 10, isolant électrique.

Les électrodes 8r, 8v, 8b destinées à recevoir respectivement les filtres rouges, verts et bleus sont des électrodes d'ITO de $0,2.10^{-3}$ mm d'épaisseur et de 0,3 mm de large. Les trois électrodes 8r, 8v et 8b correspondant à une même ligne ou à une même colonne de points d'affichage sont séparées de 0,03 mm alors que les électrodes 8r de deux lignes ou colonnes voisines sont séparées de 0,43 mm.

Le substrat transparent 10 est en particulier une lame de verre mince.

Conformément à l'invention, le substrat 10 équipé de ses triades d'électrodes est immergé dans le mélange 4. De même, une contre-électrode 12 en acier inoxydable est immergée dans le mélange 4.

Conformément à l'invention, les électrodes 8r devant être recouvertes du même filtre rouge sont reliées électriquement entre elles et portées à un potentiel positif par rapport à la contre-électrode 12, grâce à une source d'alimentation électrique 14 continue. L'application d'un potentiel positif par rapport à la contre-électrode permet une migration de l'anion carboxylique vers l'électrode positive ou anode sur laquelle il précipite en captant un proton $H^+$ selon le schéma (I). Le pigment rouge de l'émulsion 4 se dépose dans le polyester, sur l'anode, par électrophorèse et simultanément le monomère du pyrrole, du thiophène ou de l'aniline s'oxyde à l'anode libérant des protons et des électrons tout en captant les anions ($ClO_4^-$ ou $Cl^-$) du mélange 4 pour former un polymère dopé conducteur du type

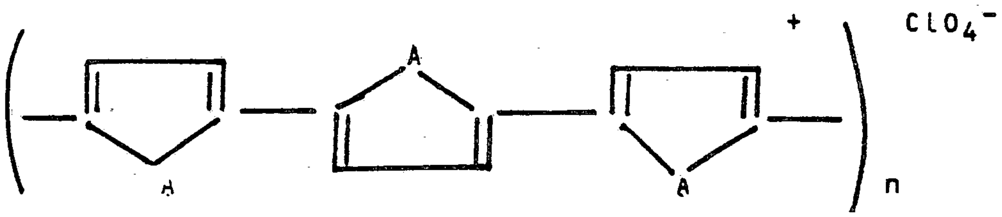

où A représente un atome de soufre ou encore un atome d'azote lié à un atome d'hydrogène et n un nombre entier allant de 1 à 500 000 dans le cas du pyrrole ou du thiophène, ou du type

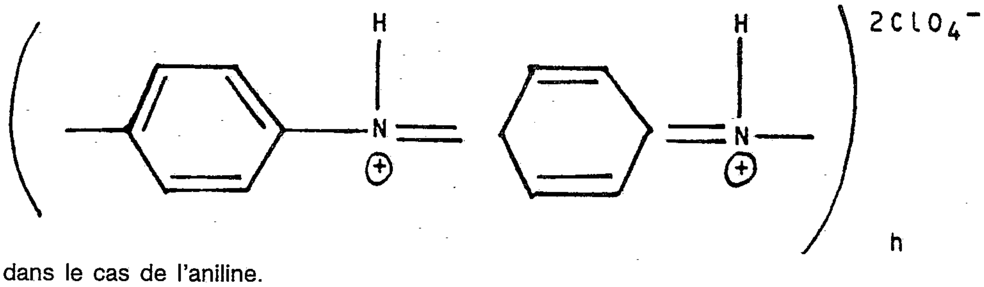

dans le cas de l'aniline.

On obtient ainsi sur les électrodes 8r en ITO un filtre coloré 6 conducteur formé d'un mélange de polyester et de polypyrrole, de polyester et de polyaniline ou polyester et de polythiophène.

Selon l'invention, l'épaisseur des filtres 6 va dépendre de la tension appliquée entre les électrodes 8r et la contre-électrode 12 ainsi que du temps d'application de cette tension. De même, la conductivité des filtres va dépendre de la concentration du monomère électropolymérisable, du dopant anionique et du courant total traversant les électrodes 8r. Par exemple, une tension de 10 volts entre les électrodes 8r et la contre-électrode 12 appliquée pendant 3 minutes permet l'obtention de filtres de 1 500 nm d'épaisseur.

Le substrat 10 équipé de ses filtres rouges 6 est ensuite extrait du mélange 4, rincé à l'eau ou à l'éthanol puis séché à 200°C pendant 30 minutes afin de réticuler le polyester grâce à la mélamine et de fixer les colorants et le polyester conducteur dopant. Les filtres obtenus ont une conductivité de 0,7 x $10^6$ ohm.cm pour 10 % en volume de polymère conducteur.

Avec les filtres rouges ainsi réalisés, on obtient un temps d'accès des signaux au cristal liquide, devant être placé au contact des filtres, de 100 ns.

On réalise ensuite un second cycle de traitement identique au précédent, comme représenté sur la figure 1b afin de former sur les électrodes 8v des filtres verts. A cet effet, on prépare une nouvelle émulsion 16 en tout point identique à l'émulsion 4 décrite précédemment, à l'exception du remplacement du pigment rouge par un pigment vert tel que le Vert Endanil B de Imperial Chemical Industries.

Le substrat 10 pourvu de ses électrodes 8r, 8v et 8b ainsi que de ses filtres rouges 6 est alors immergé dans l'émulsion 16 et les électrodes 8v, reliées électriquement entre elles, sont portées à un potentiel positif par rapport à la contre-électrode 12, présente aussi dans l'émulsion 16, grâce à la source d'alimentation électrique continue 14.

L'électrodéposition du polyester et l'électropolymérisation du monomère (aniline, pyrrole ou thiophène) de l'émulsion 16 commence dès que l'on applique une tension entre les électrodes 8v, constituant l'anode, et la contre-électrode 12. L'application d'une tension de 10 volts pendant 3 minutes permet d'obtenir, comme représenté sur la figure 1c, des filtres verts 18 sur les électrodes 8v, de 1 500 nm.

Comme précédemment, le substrat 10 est alors extrait de l'émulsion 16, rincé à l'eau ou à l'éthanol puis séché à 200°C pendant 30 minutes.

Le dépôt des filtres bleus 20 est alors effectué en reliant électriquement les électrodes 8b entre elles et à la borne + de la source d'alimentation électrique 14 et en plaçant le substrat 10 équipé de ses électrodes et ses filtres rouges et verts dans une émulsion 22 identique en tout point à l'émulsion 4, à l'exception du remplacement du pigment rouge par un pigment bleu tel que le Bleu Endanil B de Imperial Chemical Industries. Une tension de 10 volts appliquée entre les électrodes 8b et la contre-électrode 12 pendant 3 minutes permet l'obtention de filtres bleus 20 de 1 500 nm d'épaisseur. Après séchage puis recuit de l'ensemble à 200°C pendant 30 minutes, on obtient des filtres bleus ayant une conductivité de 0,7 x $10^6$ ohm.cm.

En référence aux figures 2a-2c, on va décrire maintenant une seconde variante du procédé selon l'invention.

Les potentiels de formation des principaux polymères conducteurs (polyaniline, polythiophène, polypyrrole) sont inférieurs aux potentiels de décomposition de l'eau alors que l'électrodéposition du polyester se fait à un potentiel proche du potentiel de décomposition de l'eau.

En effet, le polyester précipite sur les électrodes 8r, 8v ou 8b, en captant un proton issu de cette décomposition. L'électropolymérisation intervient donc à un potentiel plus bas que celui de l'électrodéposition. Aussi, on peut réaliser les filtres colorés rouges, verts et bleus selon l'invention en plusieurs étapes correspondant à des potentiels d'électrode et à des temps de réaction différents.

Par exemple, on dépose tout d'abord une couche de polymère conducteur dopé 24 (polyaniline,

polythiophène, polypyrrole) sur les électrodes 8r connectées entre elles en disposant le substrat 10 pourvu de ses électrodes 8r dans la solution 4 et en portant les électrodes 8r à un potentiel $V_1$ par rapport à la contre-électrode 12 portée au potentiel de la masse. Ce potentiel $V_1$ est inférieur au potentiel de décomposition de l'eau qui est de 1,23 V. La couche 24 conductrice obtenue constitue une couche d'accrochage pour les filtres rouges à réaliser.

On applique ensuite, comme représenté sur la figure 2b, aux électrodes 8r toujours connectées entre elles et immergées dans l'émulsion 4, un potentiel $V_2$ par rapport à la contre-électrode 12, supérieur à $V_1$ et proche du potentiel de décomposition de l'eau entraînant ainsi le dépôt d'une couche 26 de polyester isolante contenant le colorant, sur les couches 24.

On applique ensuite, comme représenté sur la figure 2c, une tension d'amplitude $V_1$ pour former à l'intérieur des couches de polyester isolantes 26 des filaments de polymère conducteur. Le polymère composite ainsi obtenu porte la référence 26a.

En appliquant ensuite une succession de potentiels $V_2$ puis $V_1$, comme représenté sur la figure 2d, on obtient un filtre coloré composite d'épaisseur et de conductivité contrôlées.

Après formation du filtre rouge, on recuit l'ensemble à 200° C pendant 30 minutes.

Ce recuit risquant de modifier sensiblement la conductivité du filtre obtenu ainsi que sa couleur, on choisit avantageusement des polymères conducteurs qui supportent sans trop de dommages cette température, comme en particulier les polythiophènes et les polyanilines.

Pour ne pas gêner l'étape suivante de dépôt des filtres verts puis bleus, on doit tenir compte de la diminution de conductivité des filtres rouges après traitement thermique. En effet, pour le dépôt des filtres adjacents verts et bleus, les électrodes 8r pourvues de leur filtre rouge sont sous tension en même temps que les électrodes 8v destinées à recevoir les filtres verts.

Comme les électrodes 8v d'ITO sont beaucoup plus conductrices que le polymère composite des filtres rouges 26a, on applique un premier potentiel d'amplitude $V_1$ par rapport à la contre-électrode 12, aux électrodes 8v, comme représenté sur la figure 2e, connectées entre elles et placées dans l'émulsion 16 afin de former une couche d'accrochage 28 de polyméres conducteurs sur les électrodes 8v. On applique ensuite une succession de potentiels $V_1$ et $V_2$ (figure 2d) sur les électrodes 8v de manière à former les filtres verts sans polluer les filtres rouges 26a. Le traitement est identique pour réaliser les filtres bleus.

Afin d'éviter une éventuelle dégradation du polymère conducteur dopé (couches 24, 28) au cours de l'électrodéposition du polyester, on peut électrodéposer tout d'abord, comme représenté sur la figure 3a, les filtres rouges isolants 32 en utilisant une émulsion 30 comme décrit dans le document US-A-4 522 691, sur les électrodes 8r connectées entre elles. On ajoute alors au bain d'électrodéposition 30 le monomère électropolymérisable puis le sel contenant l'anion dopant ainsi qu'un solvant organique du type amine destiné à dissoudre superficiellement le polymère isolant hôte du filtre rouge. Le mélange obtenu porte la référence 30a. On applique alors sur les électrodes 8r la tension $V_1$ permettant de former à l'intérieur du polymère hôte isolant 32 des filaments de polymères conducteurs. Les filtres obtenus portent alors la référence 32a.

Après rinçage puis recuit des filtres à 200° C pendant 30 minutes de manière à provoquer la réticulation du polyester avec la mélamine, on procède au dépôt des filtres verts comme décrit dans le document américain puis le dépôt du polymère conducteur en appliquant la tension $V_1$ aux électrodes 8v comme pour les filtres rouges.

Les filtres rouges 32a étant réticulés, suite au recuit à 200°C, sont imperméables à la pénétration du polymère conducteur utilisé pour le filtre vert et relativement peu conducteurs. On évite ainsi la contamination d'un filtre par la couleur de l'autre.

Les filtres colorés conformes à l'invention sont destinés à être montés dans un écran d'affichage à cristal liquide tel que représenté sur la figure 4.

Cet écran en couleur est constitué du substrat 10 transparent pourvu des électrodes d'affichage transparentes 8r, 8v, 8b, recouvertes respectivement des filtres colorés 6, 18 et 20 électrodéposés comme ci-dessus. Un second substrat 34 équipé d'une contre-électrode 36 est monté en regard du substrat 10, de sorte que les filtres et la contre-électrode se fassent face. Un joint périphérique 38 assure l'étanchéité de l'écran tout en maintenant écarté les deux substrats 10 et 34. La chambre ainsi définie entre les deux substrats est remplie d'un cristal liquide 40, les filtres colorés étant au contact direct de ce cristal liquide. Des moyens électriques 42 de type connu sont connectés aux électrodes 8r, 8v et 8b et à la contre-électrode 36 pour commander le cristal liquide. La contre-électrode peut être constituée d'électrodes bandes orientées perpendiculairement aux électrodes d'affichage.

**Revendications**

1. Filtre coloré conducteur composite (6, 18, 20, 26a, 32a) formé d'un polymère hôte isolant (26, 32) durci et contenant un colorant, ce polymère hôte étant dopé par un polymère conducteur électronique (24, 28) de sorte que le filtre présente une résistivité au plus égale à $10^6$ ohm.cm.

2. Filtre selon la revendication 1, caractérisé en ce qu'il contient de 1 à 20 % en volume de polymère conducteur.

3. Filtre selon la revendication 1 ou 2, caractérisé en ce qu'il contient 10 % en poids de polymère conducteur.

4. Filtre selon l'une quelconque des revendications 1 à 3, caractérisé en ce que le polymère conducteur est formé par polymérisation d'au moins un monomère choisi dans le groupe des composés aromatiques présentant une succession de simples et de doubles liaisons alternées.

5. Filtre selon la revendication 4, caractérisé en ce que le monomère est choisi dans le groupe constitué par l'aniline, le thiophène, le pyrrole et leurs dérivés.

6. Filtre selon la revendication 4 ou 5, caractérisé en ce que la polymérisation est une oxydation électrochimique en présence d'un dopant anionique.

7. Filtre selon l'une quelconque des revendications 1 à 6, caractérisé en ce que le polymère hôte est un polyester thermodurci.

8. Filtre selon l'une quelconque des revendications 1 à 7, caractérisé en ce que le polymère conducteur renferme un sel de phtalocyanine.

9. Filtre selon l'une quelconque des revendications 6 à 8, caractérisé en ce que le dopant anionique est choisi parmi $ClO_4^-$ et $Cl^-$.

10. Procédé de fabrication d'un filtre conducteur composite coloré sur une électrode conductrice transparente (8r, 8v, 8b) comprenant :

(a) au moins une étape d'électrodéposition (fig. 2b, 3a), en présence d'un colorant, d'un polymère hôte isolant thermodurcissable, sur l'électrode,

(b) au moins une étape de dopage du polymère hôte électrodéposé (fig. 2c, 3b), par un polymère conducteur électronique, et

(c) une étape de recuit afin de durcir le polymère hôte et de fixer le colorant et le polymère conducteur dans le polymère hôte.

11. Procédé de fabrication selon la revendication 10, d'une mosaïque de filtres colorés conducteurs sur des électrodes conductrices transparentes, caractérisé en ce que l'on relie électriquement les électrodes (8r, 8b, 8b) devant être recouvertes d'un même filtre (6, 18, 20, 26a, 32a)et en ce que l'on répète au moins une fois les étapes (a), (b) et (c) en utilisant dans l'étape (a) un colorant différent.

12. Procédé de fabrication selon la revendication 10 ou 11, caractérisé en ce que l'on dope le polymère isolant avec une quantité de 1 à 20 % en poids de polymère conducteur.

13. Procédé de fabrication selon l'une quelconque des revendications 10 à 12, caractérisé en ce que l'étape (b) consiste à électropolymériser, en présence d'un anion dopant, un monomère choisi dans le groupe des composés aromatiques présentant une succession de simples et de doubles liaisons alternées.

14. Procédé de fabrication selon la revendication 13, caractérisé en ce que le monomère est choisi dans le groupe constitué de l'aniline, du thiophène, du pyrrole et de leurs dérivés.

15. Procédé de fabrication selon l'une quelconque des revendications 10 à 14, caractérisé en ce que le polymère hôte est un polyester comportant des fonctions carboxyliques libres.

16. Procédé de fabrication selon la revendication 10, caractérisé en ce qu'il consiste à :
préparer une émulsion (30) contenant un polymère hôte solubilisé comportant des groupements hydrophiliques neutralisés, un solvant organique, de l'eau et un colorant,
préparer une solution d'un monomère électropolymérisable, contenant un dopant anionique,
- mélanger l'émulsion et la solution,
- immerger dans le mélange (4, 16, 22, 30a) l'électrode transparente (8r, 8v, 8b) jouant le rôle d'anode et une contre-électrode (12) jouant le rôle de cathode,
- appliquer au moins une tension continue ($V_1$, $V_2$) entre l'électrode (8r, 8v, 8b) et la contre-électrode (12) pour provoquer une électrodéposition anionique du polymère hôte, son dopage par un polymère conducteur dopé et le dépôt du colorant dans le polymère hôte, et
- recuire l'électrode revêtue du polymère hôte coloré et dopé pour durcir ledit polymère hôte.

17. Procédé de fabrication selon la revendication 10, caractérisé en ce qu'il consiste à :
- préparer une émulsion (30) contenant un polymère hôte solubilisé comportant des groupements hydrophiliques neutralisés, un solvant organique, de l'eau et un colorant,
- préparer une solution d'un monomère électropolymérisable, contenant un dopant anionique et un agent de solubilisation partielle du polymère hôte,
- immerger dans l'émulsion l'électrode transparente (8r) jouant le rôle d'anode et une contre-électrode (12) jouant le rôle de cathode,
- appliquer au moins une tension continue ($V_2$) entre l'électrode (8r) et la contre-électrode (12) pour provoquer une électrodéposition anionique du polymère hôte (32) et le dépôt du colorant dans le polymère hôte,
- ajouter la solution à l'émulsion pour former un mélange (30a),
- appliquer au moins une tension continue entre l'électrode (8r, 8v, 8b) et la contre-électrode (12), placées dans le mélange, pour provoquer le dopage du polymère hôte partiellement solubilisé par le polymère conducteur dopé, et
- recuire l'électrode revêtue du polymère hôte coloré et dopé (32a) pour durcir ledit polymère hôte.

18. Procédé de fabrication selon la revendication 16 ou 17, caractérisé en ce que l'émulsion (30) contient une amine organique assurant la solubilisation du polymère et la neutralisation des groupements carboxyliques.

19. Procédé de fabrication selon la revendication 16 ou 17, caractérisé en ce que l'émulsion contient de

la mélamine.

20. Procédé de fabrication selon la revendication 16, caractérisé en ce que l'on applique une tension $V_1$ entre l'électrode (8r, 8v, 8b) et la contre-électrode (12) pour déposer une couche de polymère conducteur dopé (24, 28) sur l'électrode, puis une tension $V_2$ supérieure à $V_1$ et proche de la tension de décomposition de l'eau pour électrodéposer le polymère hôte (26) et déposer dans ce polymère hôte un colorant.

21. Procédé de fabrication selon la revendication 20, caractérisé en ce que l'on applique une succession de tensions $V_1$ et $V_2$ alternées.

22. Procédé de fabrication selon l'une quelconque des revendications 16 à 21, caractérisé en ce que l'émulsion (30) contient un agent dispersif.

23. Procédé de fabrication selon l'une quelconque des revendications 16 à 22, caractérisé en ce que l'émulsion contient au moins un sel de phtalocyanine.

24. Ecran d'affichage en couleur a cristal liquide comportant des électrodes transparentes (8r, 8v, 8b) supportées par un substrat transparent (10) et des filtres colorés (6, 18, 20) électrodéposés sur lesdites électrodes, caractérisé en ce que les filtres sont conformes à l'une quelconque des revendications 1 à 9, et sont au contact du cristal liquide (40).

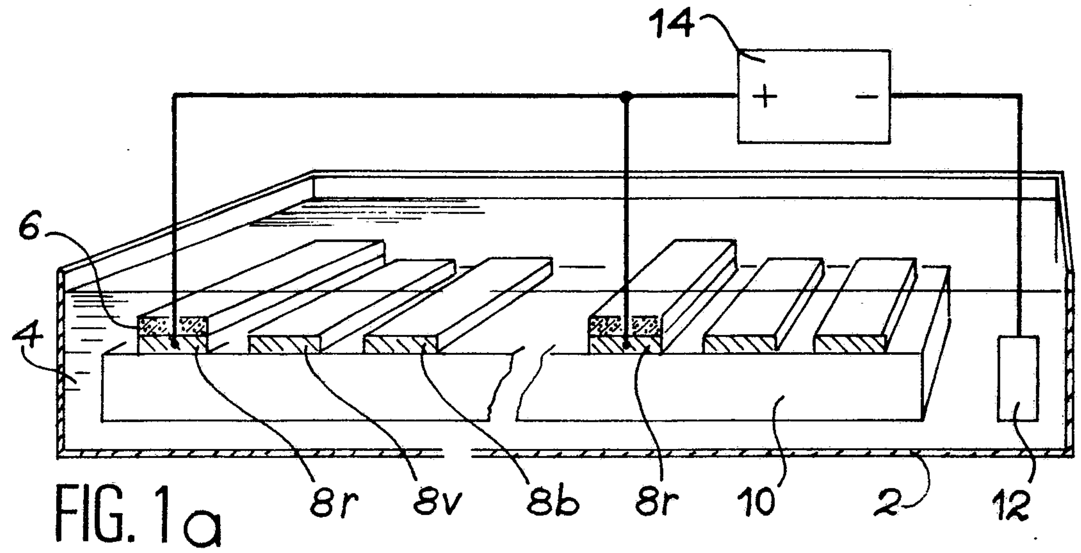


FIG. 1a

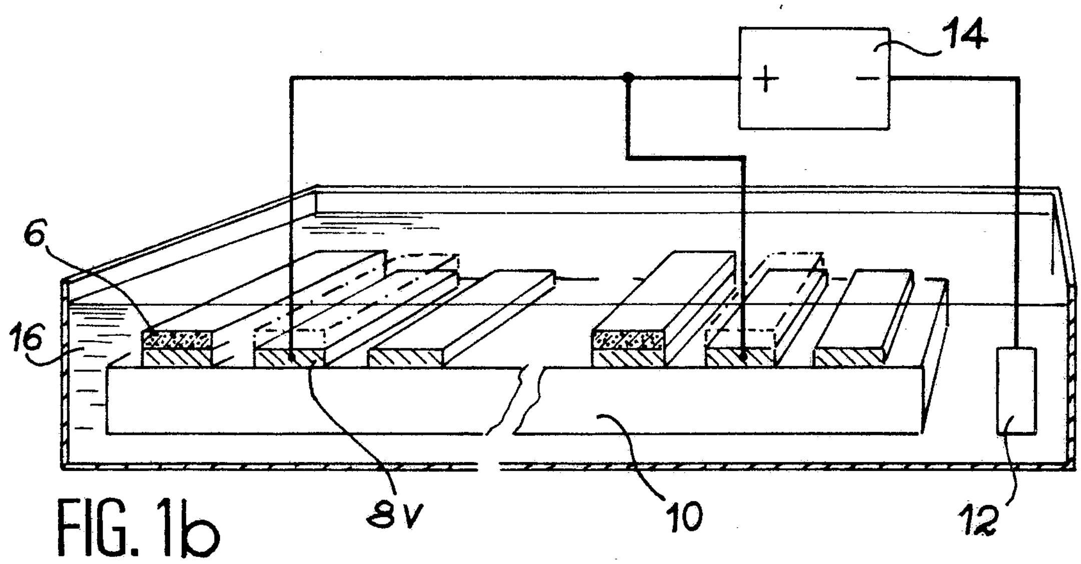


FIG. 1b

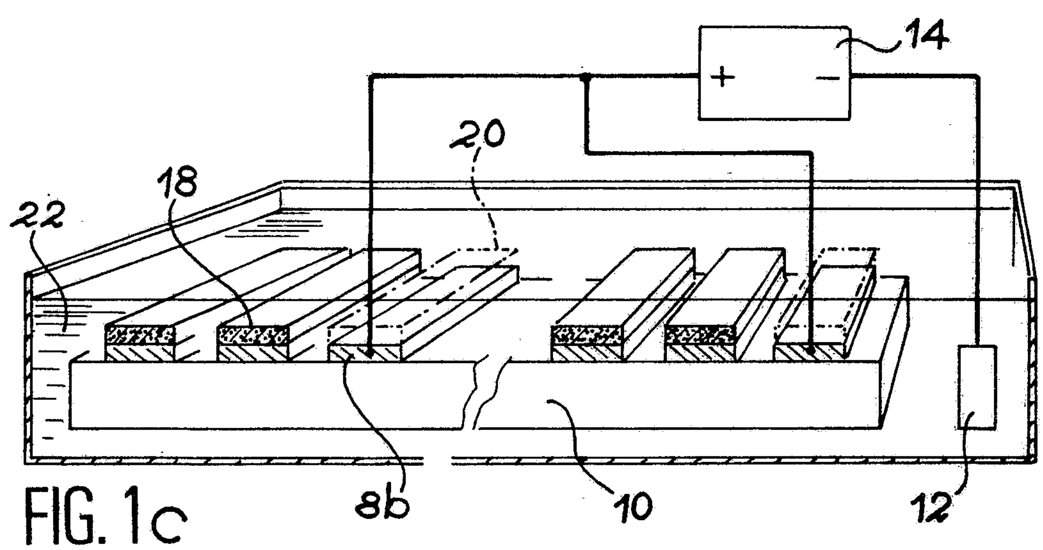


FIG. 1c

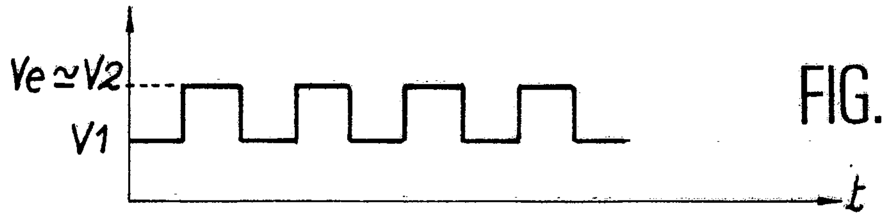


FIG. 2d

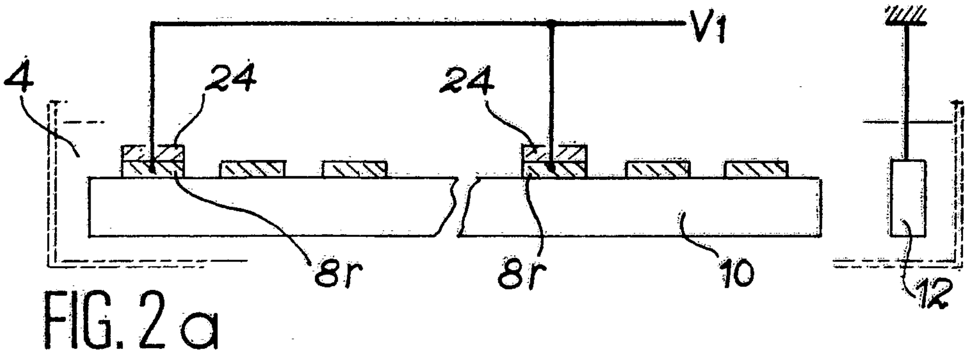


FIG. 2a

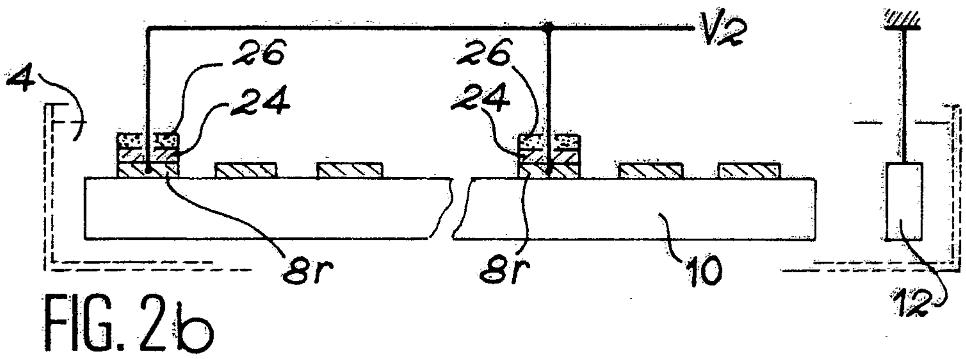


FIG. 2b

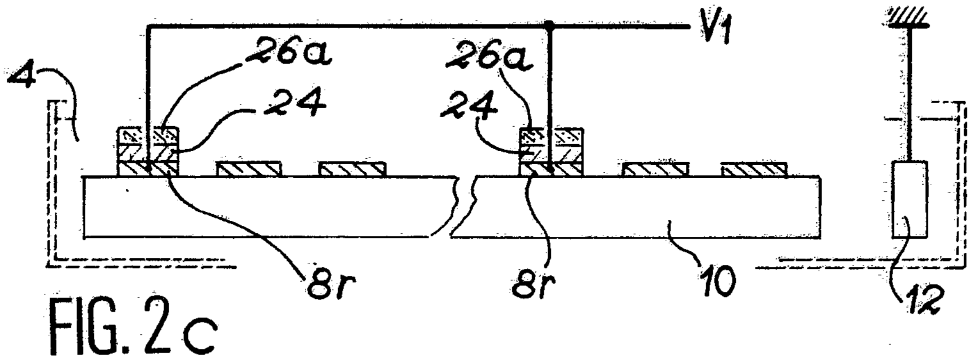


FIG. 2c

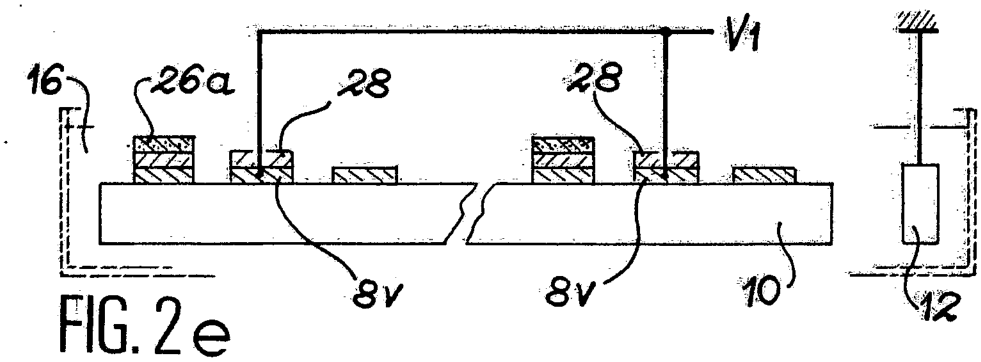


FIG. 2e

FIG. 3a

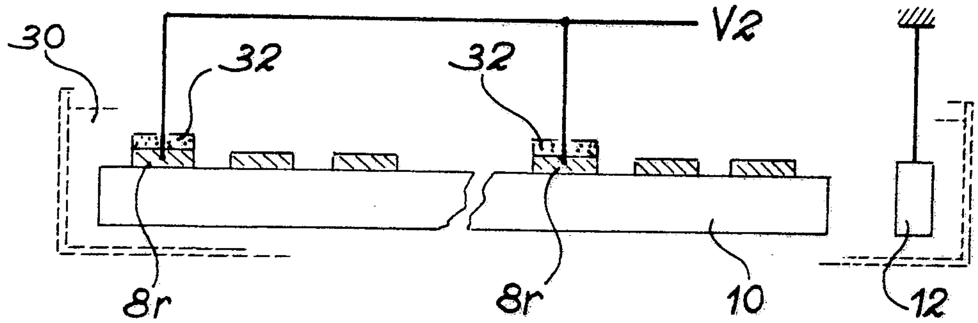


FIG. 3b

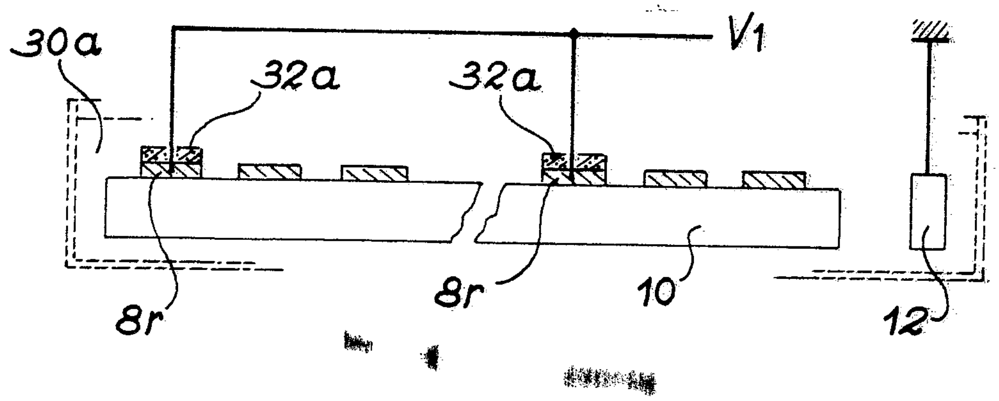

Office européen des brevets

# RAPPORT DE RECHERCHE EUROPEENNE

Numero de la demande

EP 89 40 1370

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,Y | US-A-4 522 691 (SUGINOYA)<br>* Colonne 2, ligne 30 - colonne 6, ligne 30 * | 1,10,24 | G 02 F 1/133<br>G 02 B 5/20 |
| D,A | --- | 7,11 | |
| D,Y | MACROMOLECULES, vol. 20, no. 4, 1987, pages 749-753, American Chemical Society; O. NIWA et al.: "Polypyrrole-based conducting polymer alloy films: Physical properties and film morphology"<br>* En entier * | 1,10,24 | |
| D,A | IDEM | 4-6,9 | |
| A | GB-A-2 155 023 (SEIKO INSTRUMENTS)<br>* En entier *<br>--- | 1,10,24 | |
| A | PATENT ABSTRACTS OF JAPAN, vol. 11, no. 112, (P-565)[2559], 9 avril 1987, page 76 P 565; & JP-A-61 260 218 (MITSUBISHI ELECTRIC CORP.) 18-11-1986<br>* Résumé *<br>--- | 1 | **DOMAINES TECHNIQUES RECHERCHES (Int. Cl.4)** |
| A | PATENT ABSTRACTS OF JAPAN, vol. 11, no. 334 (P-631)[2781], 31 octobre 1987, page 30 P 631; & JP-A-62 115 426 (MITSUI TOATSU CHEM. INC.) 27-05-1987<br>--- | | G 02 F<br>G 02 B |
| A | PATENT ABSTRACTS OF JAPAN, vol. 12, no. 5 (C-467)[2852], 8 janvier 1988, page 152 C 467; & JP-A-62 164 730 (TOYOTA CENTRAL RES. & DEV. LAB. INC.) 21-07-1987<br>----- | | |

Le présent rapport a été établi pour toutes les revendications

| Lieu de la recherche | Date d'achèvement de la recherche | Examinateur |
|---|---|---|
| LA HAYE | 26-07-1989 | CONRAD V.HEYDENDORFF K. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)